# EUROPEAN PATENT APPLICATION

(11) **EP 4 492 335 A1**
(43) Date of publication of application: **15.01.2025**
(21) Application number: 23196151.7
(22) Date of filing: 08.09.2023
(51) Int. Cl.: G06V 10/764, G06V 10/774, G06V 20/69, G06F 18/24

(54) **LOCAL AUTO-SCALING CLASSIFICATION OF A SPECTROSCOPIC DATASET**

(30) Priority: 13.07.2023 US 202318352072
(71) Applicant: Viavi Solutions Inc., Chandler, AZ 85286 (US)
(72) Inventor: HSIUNG, ChangMeng, California, 94065 (US); SUN, Lan, California, 95404 (US)
(74) Representative: Murgitroyd & Company

(57) **Abstract**

In some implementations, a device may receive a spectroscopic dataset associated with an unknown sample. The device may obtain a multiclass classification model to be used for classification of the unknown sample into at least one class of a plurality of classes; wherein the multi class classification model comprises a plurality of local auto-scaled one-versus-one (OVO) binary classifiers, each local auto-scaled OVO binary classifier of the plurality of local auto-scaled OVO binary classifiers being associated with a different pair of classes from the plurality of classes. The device may apply local auto-scaling to the spectroscopic dataset associated with the unknown sample to create a local auto-scaled spectroscopic dataset. The device may perform a classification of the unknown sample based on the local auto-scaled spectroscopic dataset and using the multiclass classification model comprising the plurality of local auto-scaled OVO binary classifiers.

## Description

### BACKGROUND

Classification is a predictive modeling technique that can be used to assign a sample to a class. A binary classification model can be configured to assign a sample to one of two classes, while a multiclass classification model can be configured to assign the sample to one of a plurality of classes. The type of classification model used depends on the application. Some algorithms, such as a support vector machine (SVM) algorithm, are designed for binary classification. Algorithms designed for binary classification cannot be directly used for a multiclass classification model. However, a heuristic technique can be used to split a multiclass classification problem into multiple binary classification datasets, and train a binary classification model on each binary classification dataset. Examples of these heuristic techniques include a one-versus-rest (OVR) technique and a one-versus-one (OVO) technique.

### SUMMARY

Some implementations described herein relate to a method (e.g. implemented by the device described herein). The method may include receiving, by a device, a spectroscopic dataset associated with an unknown sample. The method may include obtaining, by the device, a multiclass classification model to be used for classification of the unknown sample into at least one class of a plurality of classes, wherein the multiclass classification model comprises a plurality of local auto-scaled one-versus-one (OVO) binary classifiers, each local auto-scaled OVO binary classifier of the plurality of local auto-scaled OVO binary classifiers being associated with a different pair of classes from the plurality of classes. The method may include applying, by the device, local auto-scaling to the spectroscopic dataset associated with the unknown sample to create a local auto-scaled spectroscopic dataset. The method may include performing, by the device, a classification of the unknown sample based on the local auto-scaled spectroscopic dataset and using the multiclass classification model comprising the plurality of local auto-scaled OVO binary classifiers.

Some implementations described herein relate to a device (e.g. for implementing the method described above). The device may include one or more memories and one or more processors coupled to the one or more memories. The one or more processors may be configured to receive a spectroscopic dataset associated with an unknown sample. The one or more processors may be configured to obtain a multiclass classification model to be used for classification of the unknown sample into at least one class of a plurality of classes, wherein the multiclass classification model comprises a plurality of local auto-scaled OVO binary classifiers, each local auto-scaled OVO binary classifier of the plurality of local auto-scaled OVO binary classifiers being associated with a different pair of classes from the plurality of classes. The one or more processors may be configured to apply local auto-scaling to the spectroscopic dataset associated with the unknown sample to create a local auto-scaled spectroscopic dataset. The one or more processors may be configured to perform a classification of the unknown sample based on the local auto-scaled spectroscopic dataset and using the multiclass classification model comprising the plurality of local auto-scaled OVO binary classifiers.

Some implementations described herein relate to a method of generating a multiclass classification model (e.g. for use in the method described above). The method may include obtaining, by a device, a training dataset of spectroscopic data. The method may include identifying, by the device and based on the training dataset, a plurality of classes of the multiclass classification model. The method may include generating, by the device, a plurality of OVO binary classifiers of the multiclass classification model, wherein each OVO binary classifier of the plurality of OVO binary classifiers is associated with a different pair of classes from the plurality of classes. The method may include applying, by the device, local auto-scaling to each OVO binary classifier of the plurality of OVO binary classifiers to create a plurality of local auto-scaled OVO binary classifiers of the multiclass classification model. The method may include storing, by the device, the multiclass classification model including the plurality of local auto-scaled OVO binary classifiers.

### BRIEF DESCRIPTION OF THE DRAWINGS

Figs. 1A-1I are diagram illustrating examples associated with local auto-scaling classification of a spectroscopic dataset.
Fig. 2 is a diagram of an example environment in which systems and/or methods described herein may be implemented.
Fig. 3 is a diagram of example components of a device associated with local auto-scaling classification of a spectroscopic dataset.
Fig. 4 is a flowchart of an example process associated with classification of an unknown sample based on a local auto-scaled spectroscopic dataset and using a multiclass classification model including a plurality of local auto-scaled one-versus-one (OVO) binary classifiers.
Fig. 5 is a flowchart of an example process associated with generating a multiclass classification model including a plurality of local auto-scaled OVO binary classifiers.

### DETAILED DESCRIPTION

The following detailed description of example implementations refers to the accompanying drawings. The same reference numbers in different drawings may identify the same or similar elements. The following description uses a spectrometer as an example. However, the techniques, principles, procedures, and methods described herein may be used with any sensor, including but not limited to other optical sensors and spectral sensors.

A multispectral sensor device may be capable of measuring, obtaining, collecting, or otherwise determining a spectroscopic dataset associated with a sample (e.g., a material, a compound, a chemical, a fluid, or the like). The spectroscopic dataset may include time-series spectroscopic data associated with multiple (e.g., 16, 32, 64, and/or the like) wavelength channels.

The spectroscopic dataset can be provided to a classification model for classification of the sample. For example, a multiclass classification model may be configured to assign a given sample to one of *n*(*n* > 1) classes. In general, the spectroscopic dataset is provided to the multiclass classification model as an input, and an indication of the particular class of the *n* classes to which the sample is assigned is provided as an output. However, performance of a multiclass classification model that is generated based on and uses such spectroscopic datasets for classification suffers due to the heterogenous and complicated nature of spectroscopic dataset structures (e.g., particularly when samples of multiple classes tend to provide similar spectroscopic datasets). As a result, reliability of a multiclass classification model that uses spectroscopic datasets is reduced, and a likelihood of a misclassification of a given sample is increased.

Some implementations described herein enable classification of a spectroscopic dataset using a local auto-scaling technique. In some implementations, a classification device may receive a spectroscopic dataset associated with an unknown sample. The classification device applies local auto-scaling to the spectroscopic dataset associated with the unknown sample to create a local auto-scaled spectroscopic dataset. The classification device may obtain a multiclass classification model to be used for classification of the unknown sample into at least one class of a plurality of classes. Here, the multiclass classification model includes a plurality of local auto-scaled one-versus-one (OVO) binary classifiers, where each local auto-scaled OVO binary classifier is associated with a different pair of classes. The classification device then performs a classification of the unknown sample based on the local auto-scaled spectroscopic dataset and using the multiclass classification model comprising the plurality of local auto-scaled OVO binary classifiers. In some implementations, the techniques and apparatuses described herein improve reliability of a multiclass classification model that uses spectroscopic datasets and, similarly, reduces a likelihood of a misclassification of a given sample. Additional details are provided below.

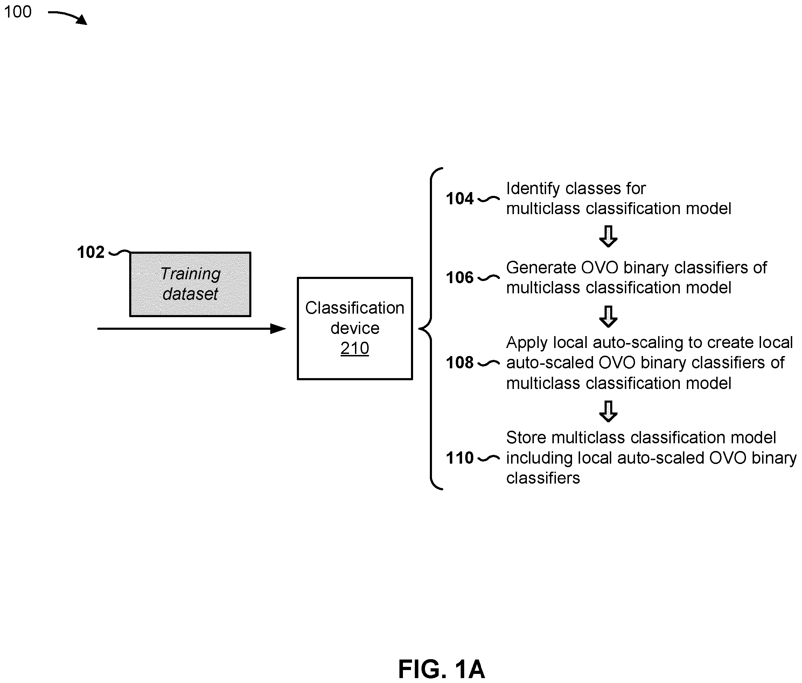

Figs. 1A-1I are diagram illustrating examples associated with local auto-scaling classification of a spectroscopic dataset. Fig. 1A is a diagram illustrating an example 100 associated with generating a multiclass classification model including a plurality of local auto-scaled OVO binary classifiers.

As shown in Fig. 1A at reference 102, a classification device 210 may obtain a training dataset of spectroscopic data. The training dataset may include spectral data based on which a multiclass classification model including a plurality of OVO binary classifiers that can be used to classify an unknown sample may be generated. For example, the training dataset may include spectra (e.g., multivariate time series data, such as near-infrared (NIR) spectra) for each sample in a group of samples (e.g., as measured by a multispectral sensor device). Here, a class of each of the samples in the group of samples is known (e.g., an indication of a class of each sample may be indicated in the training dataset). In some implementations, the training dataset includes spectra for multiple samples of the same class (e.g., to improve robustness of the multiclass classification model). Further, the training dataset may include spectra for one or more samples in each of a plurality of *n*(*n* > 1) classes.

As shown at reference 104, in a first operation associated with generating the multiclass classification model including the plurality of OVO binary classifiers, the classification device 210 may identify the plurality of *n* classes of the multiclass classification model. In some implementations, the classification device 210 may identify the plurality of *n* classes based on the training dataset. For example, the classification device 210 may obtain the training dataset including spectra for one or more samples associated with each class, with a class of each sample being indicated in the training dataset. Thus, the classification device 210 may identify the plurality of *n* classes based on the training dataset (e.g., based on an indication of a class for each sample in the training dataset).

Next, as shown at reference 106 the classification device 210 may generate a plurality of OVO binary classifiers of the multiclass classification model, where each OVO binary classifier of the plurality of OVO binary classifiers is associated with a different pair of classes from the plurality of classes.

An OVO technique is a technique that can enable a binary classification algorithm to be used for multiclass classification. According to the OVO technique, a multiclass classification dataset is split into binary classification problems. That is, the dataset is split into one dataset for each class versus every other class. For example, a multiclass classification problem with *n* classes is divided into *m*(*m* = [(*n* × (n-1))12]) binary classification datasets. As one example, a multiclass classification problem may include four classes (*n* = 4) - Cls1, Cls2, Cls3, and Cls 4. Here, the multiclass classification problem is divided into six (e.g., *m* = [(4 × (4-1))/2] = 6) binary classification problems - Cls1 vs. Cls2, Cls1 vs. Cls3, Cls1 vs. Cls4, Cls2 vs. Cls3, Cls2 vs. Cls4, and Cls3 vs. Cls4. In this example, six datasets are utilized - one dataset for each class pair. A binary classification model is then created from each binary classification dataset, with a given binary classification model being designed to assign a sample to one of the two classes associated with the binary classification dataset based on which the given binary classification model was generated. Such a binary classification model is herein referred to as an OVO binary classifier. When performing classification, a sample is assigned to the class that gets the most votes from among the plurality of OVO binary classifiers (i.e., the class that has the highest quantity of votes from among outputs of the plurality of OVO binary classifiers).

In some implementations, the classification device 210 generates the plurality of OVO binary classifiers based on the training dataset. For example, the classification device 210 may create *m* binary classification datasets based on the training dataset associated with the *n* classes. Next, the classification device 210 may generate an OVO binary classifier based on each of the *m* binary classification datasets. That is, the classification device 210 may generate *m* binary classification models, where each binary classification model is capable of assigning a sample to one of two classes associated with the binary classification dataset based on which the given binary classification model was generated. In some implementations, each OVO binary classifier of the plurality of OVO binary classifiers is a binary classification model. For example, each OVO binary classifier of the plurality of OVO binary classifiers may be a support vector machine (SVM) model. Thus, in implementations, the multiclass classification model may be an SVM-based model.

In some implementations, each column of data associated with a given OVO binary classifier corresponds to a different wavelength of light. That is, in some applications, each column of data in a given one of the *m* binary classification datasets may correspond to a different wavelength of light (e.g., a channel of a multispectral sensor device 205), meaning that a given column may comprise spectroscopic data associated with a single wavelength and multiple scans. Further in some implementations, each row of data associated with a given OVO binary classifier corresponds to a spectroscopic scan across a range of wavelengths of light. That is, in some applications, each row of data in a given one of the *m* binary classification datasets may correspond to a particular scan (e.g., as collected by the multispectral sensor device 205), meaning that a given row may comprise spectroscopic data associated with multiple wavelengths for a single scan.

Next, as shown at reference 108, the classification device 210 may apply local auto-scaling to each OVO binary classifier of the plurality of OVO binary classifiers to create a plurality of local auto-scaled OVO binary classifiers of the multiclass classification model.

Auto-scaling is a data preprocessing technique that can be used to, for example, improve model performance (e.g., increase accuracy of prediction), reduce an impact of data outliers, or ensure that data is on the same scale. Conventionally, auto-scaling is applied on a global-level. For example, according to conventional practice, auto-scaling (if applied at all) is applied to training data prior to generation of a plurality of binary classification models (e.g., such that auto-scaling would be applied to the entire set of training data). As used herein, local auto-scaling refers to auto-scaling performed at a local level - meaning that auto-scaling is performed for each OVO binary classifier individually. That is, local auto-scaling may include auto-scaling of a binary classification dataset associated with a particular OVO binary classifier (e.g., rather than auto-scaling the entire training dataset). In some implementations, by applying local auto-scaling a viewing angle to high-dimensional spectroscopic patterns is centered and the spectroscopic patterns are scaled to equal variance (e.g., such that all channels have standard deviation of 1), which significantly improves resolution of all channels. In some implementations, the local auto-scaling is a column-wise operation.

In some implementations, to apply local auto-scaling to a given OVO binary classifier, the classification device 210 first performs mean centering for each column of data associated with the given OVO binary classifier. For example, the classification device 210 may calculate a mean of data in each column from the binary classification dataset associated with the given OVO binary classifier. The classification device 210 may then subtract a respective mean from data in each column (e.g., so that the mean of each column is zero). Next, the classification device 210 may scale each column of data associated with the given OVO binary classifier to unit variance (e.g., such that variances in all directions are scaled to unity). For example, the classification device 210 may calculate a standard deviation (STD) of each column of the mean-centered binary classification dataset associated with the OVO binary classifier, and may then divide data from a given column by a respective STD of the given column. In some implementations, after local auto-scaling is applied to a binary classification dataset, the mean of every column is zero and the STD is equal to 1. In some implementations, the classification device 210 may apply local auto-scaling to each OVO binary classifier. That is, the classification device 210 may apply local auto-scaling to each binary classification dataset associated with the plurality of OVO binary classifiers individually (e.g., such that the classification device 210 applies local auto-scaling *m* times, once to each of the *m* binary classification datasets).

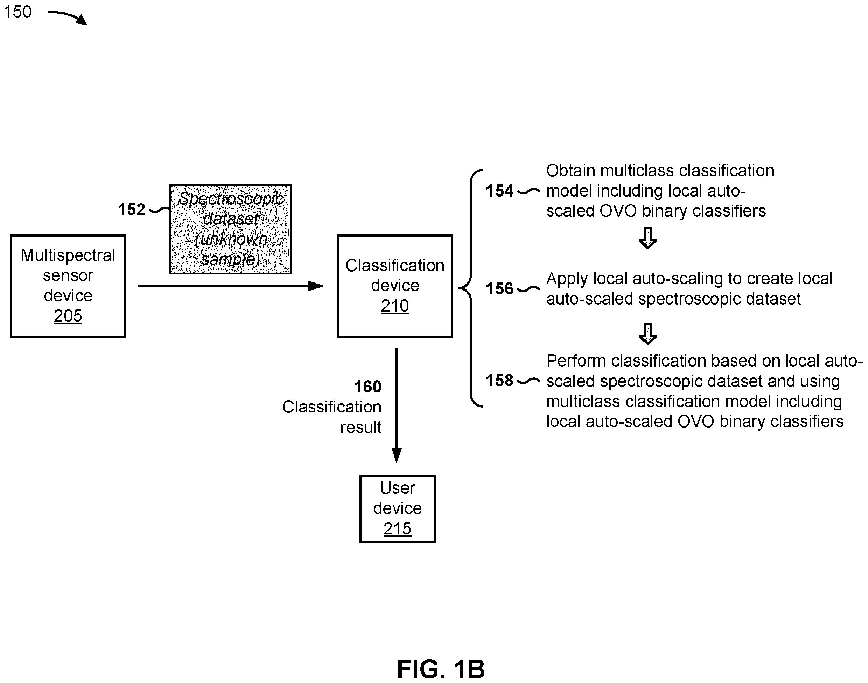

In this way, the classification device 210 may generate a multiclass classification model including a plurality of local auto-scaled OVO binary classifiers. In some implementations, the multiclass classification model may be used to perform classification of an unknown sample, an example of which is described below with respect to Fig. 1B.

As shown at reference 110, the classification device 210 may store the multiclass classification model including the plurality of local auto-scaled OVO binary classifiers. For example, the classification device 210 may store the multiclass classification model in a memory of the classification device 210 (e.g., such that the classification device 210 may access the multiclass classification model at a later time). Additionally, or alternatively, the classification device 210 may provide the multiclass classification model for storage in another device (e.g., multispectral sensor device 205, user device 215, or the like).

Fig. 1B is a diagram illustrating an example 150 associated with classification of an unknown sample based on a local auto-scaled spectroscopic dataset and using a multiclass classification model including a plurality of local auto-scaled OVO binary classifiers.

As shown in Fig. 1B at reference 152, the classification device 210 may receive a spectroscopic dataset associated with an unknown sample. The spectroscopic dataset may include spectral data corresponding to a sample that is to be classified using a multiclass classification model including a plurality of local auto-scaled OVO binary classifiers. For example, the spectroscopic dataset may include spectra (e.g., multivariate time series data, such as NIR spectra) for a sample (e.g., as measured by a multispectral sensor device 205). Here, a class of the sample is unknown. In some aspects, as indicated in Fig. 1B, the classification device 210 may receive the spectroscopic dataset from multispectral sensor device 205.

In some implementations, each column of data in the spectroscopic dataset corresponds to a different wavelength of light. That is, in some applications, each column of data in in the spectroscopic dataset may correspond to a different wavelength of light (e.g., a channel of the multispectral sensor device 205), meaning that a given column may comprise spectroscopic data associated with a single wavelength. Further, in some implementations, each row of data in the spectroscopic dataset corresponds to a scan across a range of wavelengths of light. That is, in some applications, each row of data in the spectroscopic dataset may correspond to a particular scan (e.g., as collected by the multispectral sensor device 205), meaning that a given row may comprise spectroscopic data associated with multiple wavelengths for a single scan.

As shown at reference 154, the classification device 210 may obtain a multiclass classification model to be used for classification of the unknown sample into at least one class of a plurality of classes, where the multiclass classification model comprises a plurality of local auto-scaled OVO binary classifiers, each local auto-scaled OVO binary classifier of the plurality of local auto-scaled OVO binary classifiers being associated with a different pair of classes from the plurality of classes. For example, the classification device 210 may generate, store, or otherwise have access to a multiclass classification model including a plurality of local auto-scaled OVO binary classifiers (e.g., a multiclass classification model generated as described above with respect to Fig. 1A).

As shown at reference 156, the classification device 210 may apply local auto-scaling to the spectroscopic dataset associated with the unknown sample to create a local auto-scaled spectroscopic dataset. In some implementations, the classification device 210 applies local auto-scaling to the spectroscopic dataset for each OVO binary classifier. Thus, in some implementations, the classification device 210 applies local auto-scaling to the spectroscopic dataset *m* times - once for each of the *m* local auto-scaled OVO binary classifiers. In some implementations, to apply local auto-scaling to the spectroscopic dataset with respect to a given local auto-scaled OVO binary classifier, the classification device 210 first performs mean centering for each column of data in the spectroscopic dataset. For example, the classification device 210 may calculate (or determine from memory) a mean of data in each column from the binary classification dataset associated with the given local auto-scaled OVO binary classifier. The classification device 210 may then subtract a respective mean from data in each column of the spectroscopic dataset. Next, the classification device 210 may scale each column of data in the spectroscopic dataset. For example, the classification device 210 may calculate (or determine from memory) a STD of each column of the mean-centered binary classification dataset associated with the given local auto-scaled OVO binary classifier, and may then divide data from a given column of the spectroscopic dataset by a respective STD . In some implementations, the classification device 210 applies local auto-scaling with respect to each of the local auto-scaled OVO binary classifiers, meaning that the spectroscopic dataset associated with the unknown sample is locally auto-scaled once for each OVO binary classifier. An iteration of the local auto-scaled spectroscopic dataset associated with a given local auto-scaled OVO binary classifier can then be used by that local auto-scaled OVO binary classifier in association with classifying the unknown sample. In this way, the classification device 210 may create a local auto-scaled spectroscopic dataset that comprises *m* iterations of the local auto-scaled spectroscopic dataset, where each of the *m* iterations of the local auto-scaled spectroscopic dataset is associated with a different one of a plurality of *m* local auto-scaled OVO binary classifiers.

As shown at reference 158, the classification device 210 may perform a classification of the unknown sample based on the local auto-scaled spectroscopic dataset and using the multiclass classification model comprising the plurality of local auto-scaled OVO binary classifiers. In some implementations, when performing the classification of the unknown sample, the classification device 210 may determine a vote provided by each local auto-scaled OVO binary classifier of the plurality of local auto-scaled OVO binary classifiers based on the local auto-scaled spectroscopic dataset. The classification device 210 may then identify a class of the plurality of classes with a highest quantity of votes, and may classify the unknown sample as being included in the class of the plurality of classes with the highest quantity of votes. For example, the multiclass classification model may comprise *m* local auto-scaled OVO binary classifiers. Here, the classification device 210 may provide the local auto-scaled spectroscopic dataset to each of the *m* local auto-scaled OVO binary classifiers. A given local auto-scaled OVO binary classifier then provides a vote indicating one of two classes associated with the given local auto-scaled OVO binary classifier. The classification device 210 receives votes from all of the local auto-scaled OVO binary classifiers, and then identifies a class of the *n* classes that received the most votes. The classification device 210 then assigns the unknown sample to the class that received the most votes.

As shown at reference 160, the classification device 210 may provide information associated with a result of the classification of the unknown sample. For example, as indicated in Fig. 1B, the classification device 210 may provide the information associated with the result of the classification to the user device 215. In some implementations, the information associated with the result of the classification may include an indication of the class to which the unknown sample was assigned. As examples, each class may be a different type of material, a different type of compound, a different type of chemical, or a different type of fluid, among other examples. Additionally, or alternatively, the information associated with the result of the classification may include other information, such as an indication of a quantity of votes received by the class to which the unknown sample was assigned, an indication of a quantity of votes received by one or more other classes (e.g., a quantity of votes received by a class with the second-most votes), or another type of information.

In some implementations, the local auto-scaling of the plurality of OVO binary classifiers and the local auto-scaling of spectroscopic datasets associated with unknown samples improve performance of the multiclass classification model (e.g., as compared to a multiclass classification model that uses OVO binary classifiers without local auto-scaling). For example, the techniques and apparatuses described herein described improve discrimination power of the multiclass classification model. That is, the techniques and apparatuses described herein improve the likelihood that the multiclass classification model will assign unrelated samples to different classes. Similarly, the techniques and apparatuses described herein described herein improve generalization of the multiclass classification model. That is, the techniques and apparatuses described herein described herein improve an ability of the multiclass classification model to adapt to new or unseen spectroscopic dataset, which in turn increases a classification success rate of the multiclass classification model.

Further the local auto-scaling of the plurality of OVO binary classifiers improve reliability and robustness of a multiclass classification model that performs classification based on spectroscopic datasets and, similarly, reduces a likelihood of a misclassification of a given sample. As a result, resource consumption (e.g., consumption of processing resources, energy consumption, consumption of network resources) associated with performing classification can be reduced. For example, with a conventional (less reliable) multiclass classification model, multiple iterations of the same classification may need to be performed (e.g., by the same classification device or by multiple classification devices), followed by some other data processing technique to average classification results in order to ensure that an accurate classification result is achieved. However, with the multiclass classification model including the plurality of local auto-scaled OVO binary classifiers, accuracy of classification of the multiclass classification model is increased. This means that additional iterations of classification need not be performed (by the classification device 210 or any other devices). As a result, consumption of processing resources, energy consumption, and consumption of network resources associated with performing classification is reduced.

As indicated above, Figs. 1A and 1B are provided as examples. Other examples may differ from what is described with regard to Figs. 1A and 1B. The number and arrangement of devices shown in Figs. 1A and 1B are provided as an example. In practice, there may be additional devices, fewer devices, different devices, or differently arranged devices than those shown in Figs. 1A and 1B. Furthermore, two or more devices shown in Figs. 1A and 1B may be implemented within a single device, or a single device shown in Figs. 1A and 1B may be implemented as multiple, distributed devices. Additionally, or alternatively, a set of devices (e.g., one or more devices) shown in Figs. 1A and 1B may perform one or more functions described as being performed by another set of devices shown in Figs. 1A and 1B.

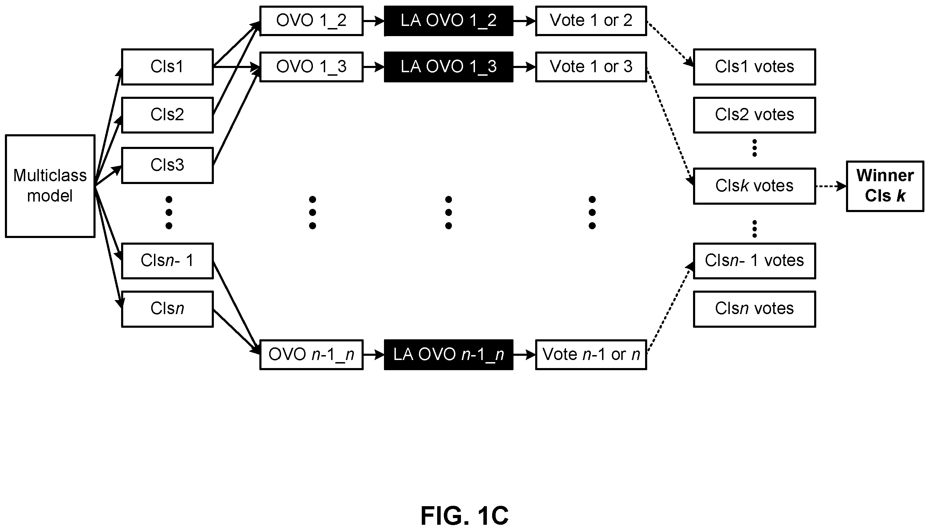

Fig. 1C is a diagram illustrating an example algorithm associated with performing a classification of an unknown sample using a multiclass classification model including a plurality of local auto-scaled OVO binary classifiers.

As shown in Fig. 1C, the multiclass classification model comprises a plurality of *n* classes (e.g., Cls1 through Clsn) and a plurality of *m* OVO binary classifiers (e.g., OVO 1_2 through OVO *n-1_n).* are generated. As further shown, local auto-scaling is applied to each OVO binary classifier to create a plurality of *m* local auto-scaled OVO binary classifiers (e.g., OVO 1_2 through OVO *n-1_n).* Here, when performing a classification of an unknown sample, each local auto-scaled OVO binary classifier indicates a vote for one of two associated classes (e.g., LA OVO 1_2 indicates a vote for Cls1 or Cls2). A class Clsk that receives the most votes is identified, and the unknown sample is classified as being included in class Cksk.

As indicated above, Fig. 1C is provided as an example. Other examples may differ from what is described with regard to Fig. 1C.

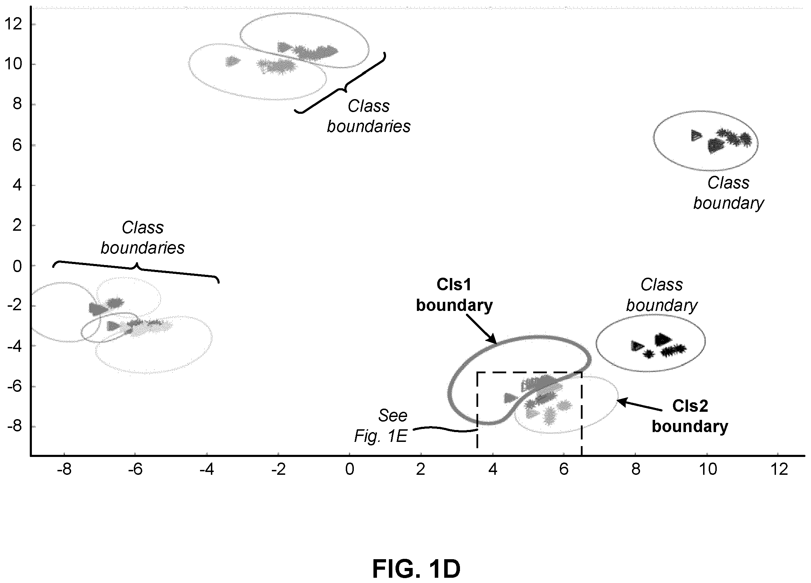

Figs. 1D-1F are diagrams illustrating improvement of performance of the multiclass classification model through the use of local auto-scaling. In the example associated with Figs. 1D-1F, an multiclass classification model includes 10 classes of polymer materials.

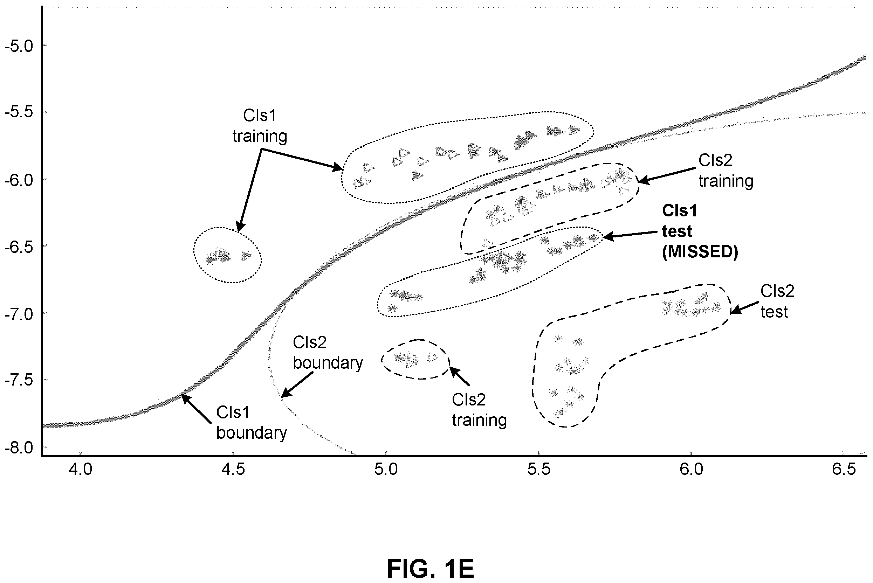

Figs. 1D and 1E are diagrams illustrating principal component analysis (PCA) plots associated with a multiclass classification model that comprises conventional OVO binary classifiers associated with the 10 classes.

In Fig. 1D, the horizontal axis is a principal component 1 (PC1) score, and the vertical axis is a principal component 2 (PC2) score. As indicated in Fig. 1D, the multiclass classification model including conventional OVO binary classifiers provides a class boundary for each of the 10 classes (e.g., calculated by SVM). As illustrated in Fig. 1D, several of the class boundaries overlap or nearly overlap for the multiclass classification model including the conventional OVO binary classifiers. Each point corresponds to one spectrum projected into the PCA space. Notably, Fig. 1D is provided to illustrate the overlap or near-overlap of class boundaries, and distinction of individual points in Fig. 1D is not significant.

Fig. 1E is a diagram illustrating a close-up view of the indicated region of the PCA plot shown in Fig. 1D near an overlap of a boundary associated with class Cls1 and a boundary associated with a class Cls2. As shown in Fig. 1E, the class Cls1 boundary and the class Cls2 boundary overlap, meaning that a likelihood of a misclassification associated with class Cls1 and Cls2 is increased. Points corresponding to training data based at least in part on which the multiclass classification model was generated are identified in Fig. 1E as "Cls1 training" and "Cls2 training." As shown in Fig. 1E, when the multiclass classification model including the conventional OVO binary classifiers is provided a spectroscopic dataset comprising test data for a Cls2 sample (e.g., a spectroscopic dataset for a sample known to be in class Cls2), shown as "Cls2 test," the data is projected into the PCA space within the boundary of class Cls2, meaning that the multiclass classification model accurately classifies the Cls2 sample as being included in the class Cls2. However, when the multiclass classification model including the conventional OVO binary classifiers is provided a spectroscopic dataset comprising test data for a Cls1 sample (e.g., a spectroscopic dataset for a sample known to be in class Cls1), shown as "Cls1 test," the data is projected into the PCA space within the boundary of class Cls2, meaning that the multiclass classification model misclassifies the Cls1 sample as being included in the class Cls2.

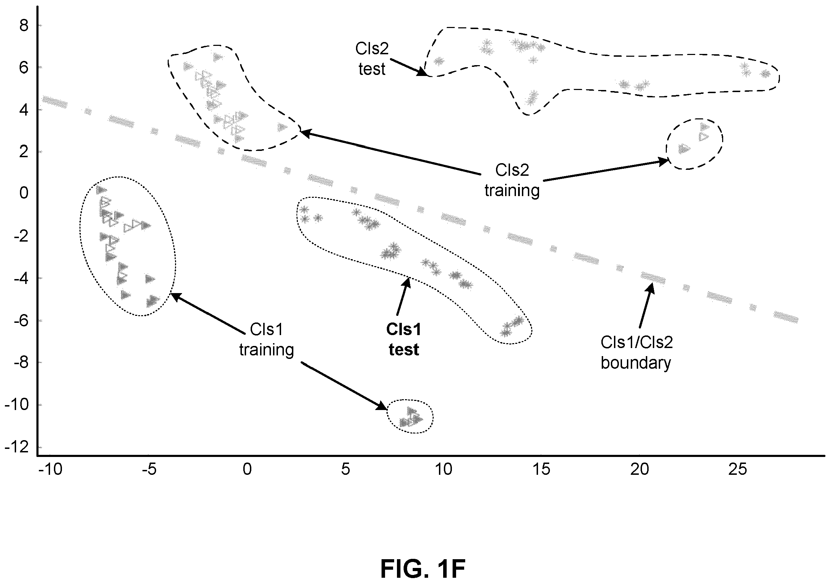

Fig. 1F is a diagram illustrating a region of a PCA plot near an overlap of a boundary associated with class Cls1 and a boundary associated with a class Cls2 in a scenario in which the multiclass classification model includes a plurality of local auto-scaled OVO binary classifiers. That is, Fig. 1F illustrates a boundary between the class Cls1 and the class Cls2 when local auto-scaling has been applied to the plurality of OVO binary classifiers of the multiclass classification model. Notably, the viewing angle and resolution of the spectroscopic patterns are improved in Fig. 1F (e.g., as compared to Fig. 1E).

As shown in Fig. 1F, the use of the local auto-scaled OVO binary classifiers increases separation between points associated with the class Cls1 and Cls2. As a result, when the multiclass classification model including the plurality of local auto-scaled OVO binary classifiers is provided the spectroscopic dataset comprising test data for the Cls1 sample (e.g., the same spectroscopic dataset used in Fig. 1E), the data is projected into the PCA space within the boundary of class Cls1, meaning that the multiclass classification model accurately classifies the Cls1 sample as being included in the class Cls1. As shown, the multiclass classification model including the plurality of local auto-scaled OVO binary classifiers also accurately classifies the Cls2 sample as being included in the class Cls2.

As indicated above, Figs. 1D-1F are provided as examples. Other examples may differ from what is described with regard to Figs. 1D-1F.

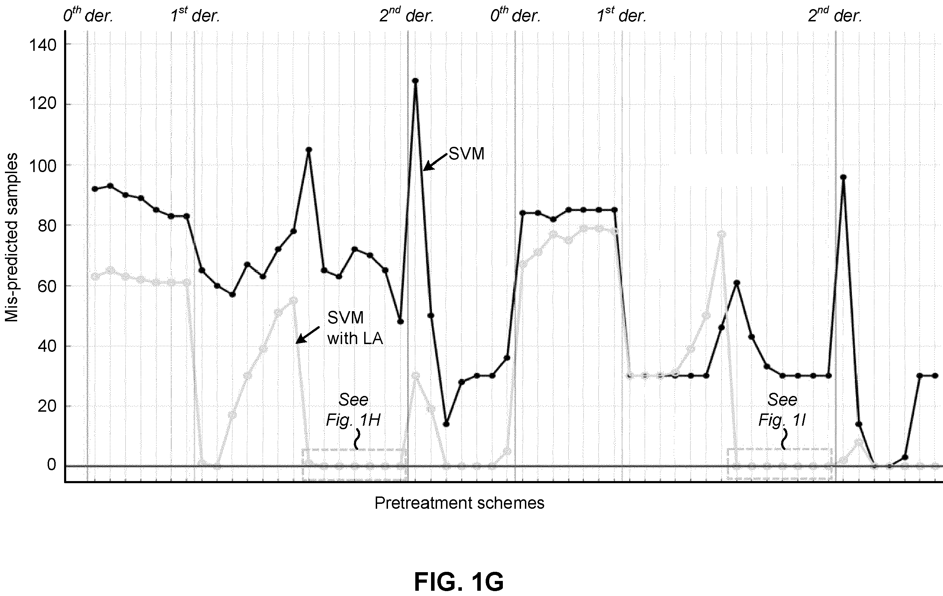

Figs. 1G-1I are diagrams illustrating examples of classification success rates for an SVM-based multiclass classification model including conventional OVO binary classifiers and an SVM-based multiclass classification model including local auto-scaled OVO binary classifiers. In this example, the SVM-based multiclass classification models are designed to classify a sample into one of 46 classes. In Figs. 1G-1I, points along the horizontal axis correspond to different pretreatment schemes associated with preprocessing spectral data, and the vertical axis corresponds to a quantity of misclassifications. Lines labeled "SVM" correspond to misclassifications by the SVM-based multiclass classification model including the conventional OVO binary classifiers, while lines labeled "SVM with LA" correspond to misclassifications by the SVM-based multiclass classification model including local auto-scaled OVO binary classifiers.

As can be seen in Fig. 1G, the SVM-based multiclass classification model including the local auto-scaled OVO binary classifiers in general performs significantly better than (e.g., has fewer misclassifications than) the SVM-based multiclass classification model including conventional OVO binary classifiers across the different pretreatment schemes.

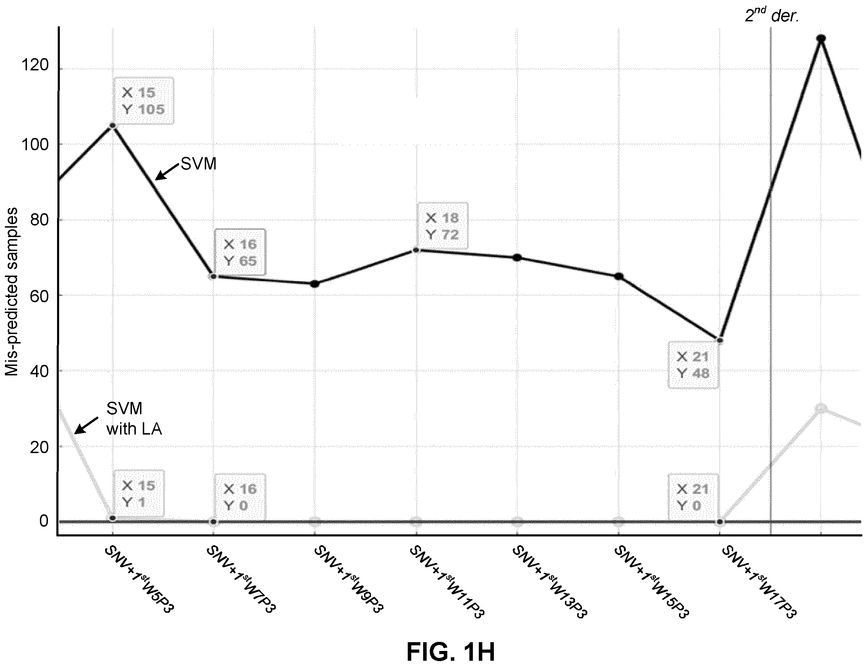

Fig. 1H is a diagram illustrating a close-up view of a first indicated region of the diagram shown in Fig. 1G. The region shown in Fig. 1H corresponds to a particular set of pretreatment schemes, each of which comprise applying a standard normal variate (*SNV*) operation to the spectral data followed by calculating a 1^{st} derivative (*1^{st}*) for a particular moving window size *Wx*(*x* = 5, 7, 9, 11, 13, 15, or 17) with a 3^{rd} order polynomial (P3). As shown, for this set of pretreatment schemes, the multiclass classification model including the plurality of local auto-scaled OVO binary classifiers has zero misclassifications (e.g., the multiclass classification model including the plurality of local auto-scaled OVO binary classifiers has a 100% success rate), while the multiclass classification model including the conventional OVO binary classifiers has a significant number of misclassifications (e.g., 48 or more).

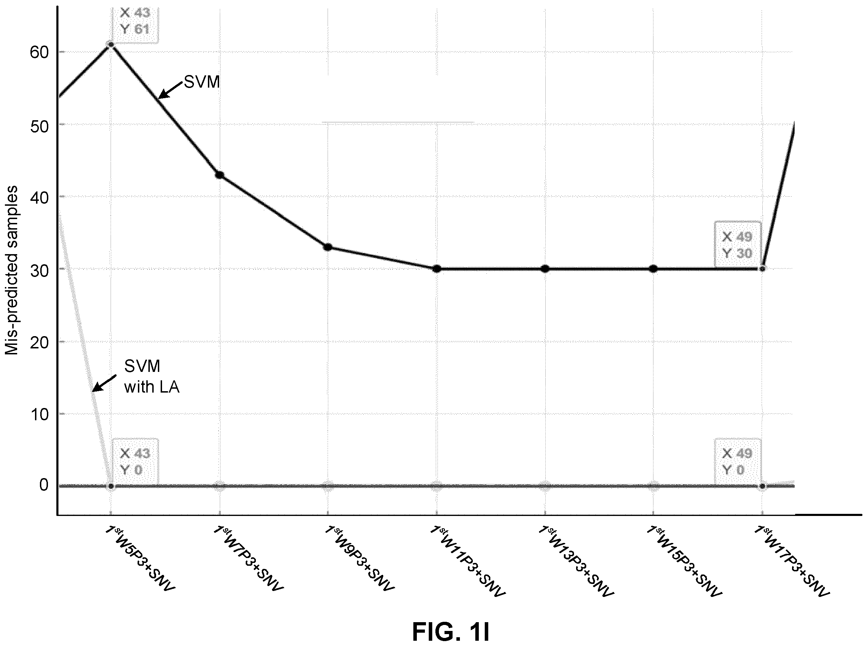

Fig 1I is a diagram illustrating a close-up view of a second indicated region of the diagram shown in Fig. 1G. The region shown in Fig. 1I corresponds to a particular set of pretreatment schemes, each of which comprise calculating a 1^{st} derivative (*1^{st}*) associated with the spectroscopic dataset for a particular moving window size *Wx(x* = 5, 7, 9, 11, 13, 15, or 17) with a 3^{rd} order polynomial *(P3),* followed by applying a standard normal variate (*SNV*) operation. As shown, for this set of pretreatment schemes, the multiclass classification model including the plurality of local auto-scaled OVO binary classifiers has zero misclassifications (e.g., the multiclass classification model including the plurality of local auto-scaled OVO binary classifiers has a 100% success rate), while the multiclass classification model including the conventional OVO binary classifiers has a significant number of misclassifications (e.g., 30 or more).

As indicated above, Figs. 1G-1I are provided as examples. Other examples may differ from what is described with regard to Figs. 1G-1I.

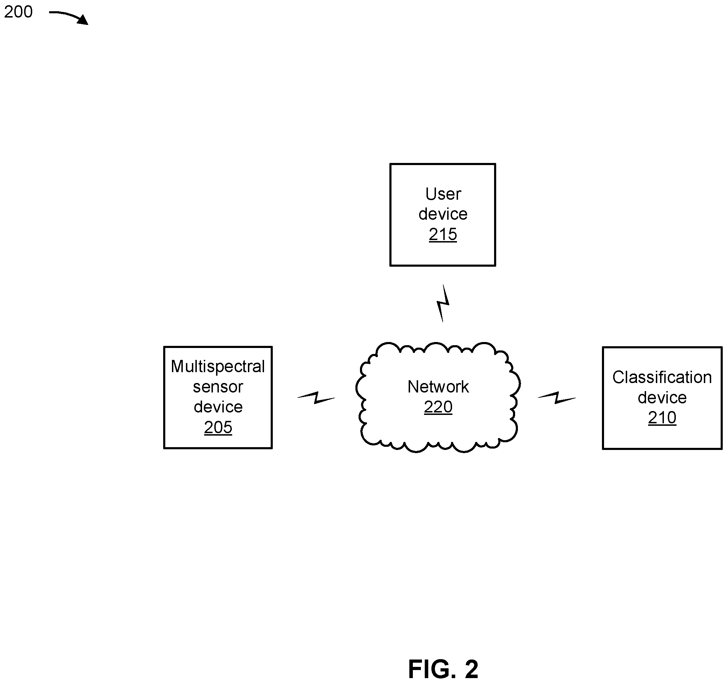

Fig. 2 is a diagram of an example environment 200 in which systems and/or methods described herein may be implemented. As shown in Fig. 2, environment 200 may include a multispectral sensor device 205, a classification device 210, a user device 215, and a network 220. Devices of environment 200 may interconnect via wired connections, wireless connections, or a combination of wired and wireless connections.

Multispectral sensor device 205 includes a device capable of measuring, gathering, collecting, or otherwise determining absorption spectra data associated with a plurality of wavelength channels. For example, multispectral sensor device 205 may include a multispectral sensing device capable of determining absorption data on each of 64 wavelength channels. In some implementations, multispectral sensor device 205 may operate in the visible spectrum, the near infrared spectrum, and/or the infrared spectrum. In some implementations, multispectral sensor device 205 may be, for example, a handheld device or a wearable device (e.g., a device that can be worn on a wrist, a finger, an arm, a leg, a head, or an ear). In some implementations, multispectral sensor device 205 may receive information from and/or transmit information to another device in environment 200, such as classification device 210.

Classification device 210 includes a device capable of performing classification of an unknown sample according to a local auto-scaling technique, as described herein. For example, classification device 210 may include an application specific integrated circuit (ASIC), an integrated circuit, a server, a group of servers, and/or another type of communication and/or computing device. In some implementations, classification device 210 may be integrated with multispectral sensor device 205 (e.g., such that multispectral sensor device 205 and classification device 210 are on the same chip, in the same package, in the same housing, and/or in the same handheld or wearable device). Alternatively, in some implementations, classification device 210 may be separate from multispectral sensor device 205. In some implementations, classification device 210 may receive information from and/or transmit information to another device in environment 200, such as multispectral sensor device 205.

User device 215 includes one or more devices capable of receiving, generating, storing, processing, and/or providing information associated with classification of an unknown sample according to a local auto-scaling technique, as described herein. For example, user device 215 may include a communication and/or computing device, such as a mobile phone (e.g., a smart phone or a radiotelephone), a laptop computer, a tablet computer, a handheld computer, a desktop computer, a gaming device, a wearable communication device (e.g., a smart wristwatch or a pair of smart eyeglasses), or a similar type of device. In some implementations, multispectral sensor device 205 and/or classification device 210 may be integrated with user device 215 (e.g., such that multispectral sensor device 205 and/or classification device 210 are included in a housing of user device 215).

Network 220 includes one or more wired and/or wireless networks. For example, network 220 may include a wired network (e.g., when multispectral sensor device 205 and classification device 210 are included in the same package and/or the same chip). As another example, network 220 may include a cellular network (e.g., a long-term evolution (LTE) network, a code division multiple access (CDMA) network, a 3G network, a 4G network, a 5G network, or another type of next generation network), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The quantity and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

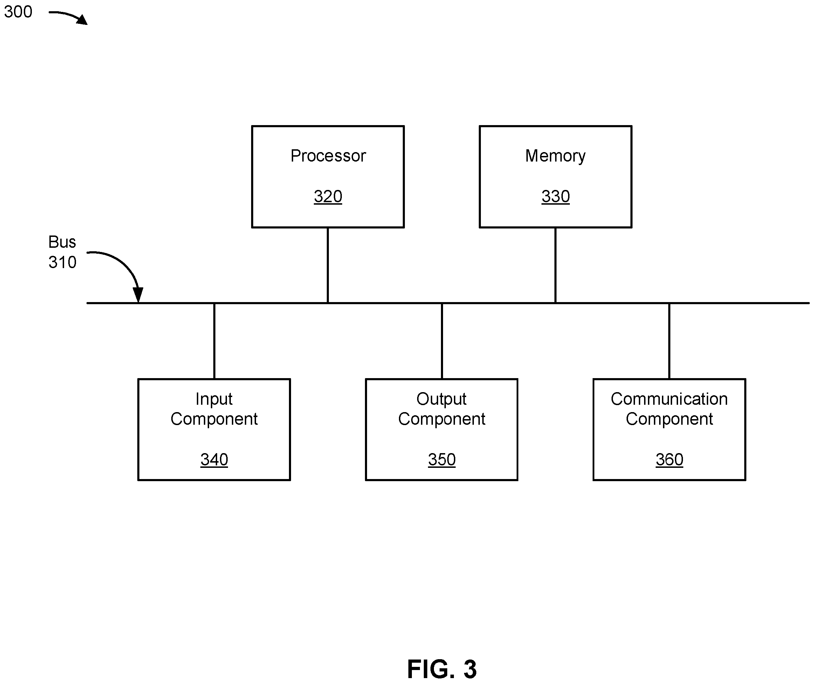

Fig. 3 is a diagram of example components of a device 300 associated with local auto-scaling classification of a spectroscopic dataset. The device 300 may correspond to multispectral sensor device 205, classification device 210, and/or user device 215. In some implementations, multispectral sensor device 205, classification device 210, and/or user device 215 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

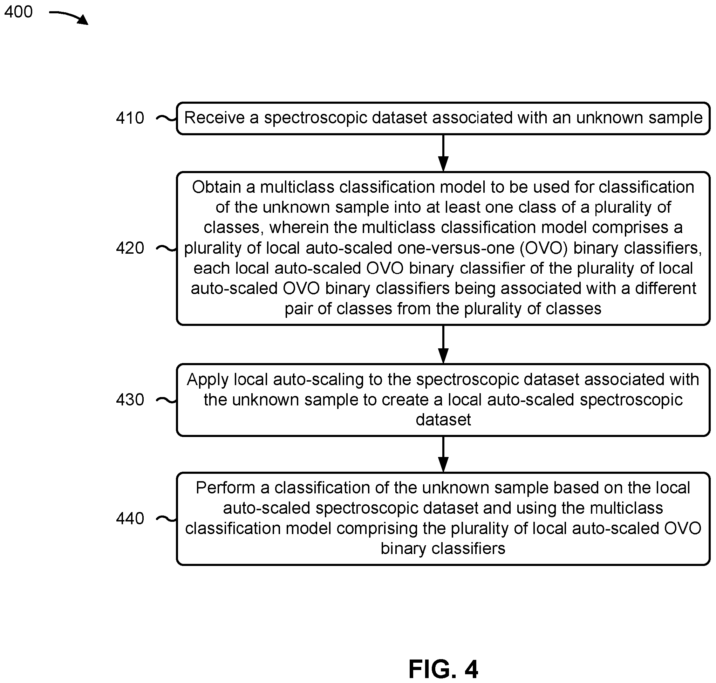

Fig. 4 is a flowchart of an example process 400 associated with classification of an unknown sample based on a local auto-scaled spectroscopic dataset and using a multiclass classification model including a plurality of local auto-scaled OVO binary classifiers. In some implementations, one or more process blocks of Fig. 4 are performed by a classification device (e.g., classification device 210). In some implementations, one or more process blocks of Fig. 4 are performed by another device or a group of devices separate from or including the classification device, such as multispectral sensor device 205, classification device 210, and/or user device 215. Additionally, or alternatively, one or more process blocks of Fig. 4 may be performed by one or more components of device 300, such as processor 320, memory 330, input component 340, output component 350, and/or communication component 360.

As shown in Fig. 4, process 400 may include receiving a spectroscopic dataset associated with an unknown sample (block 410). For example, the classification device may receive a spectroscopic dataset associated with an unknown sample, as described above.

As further shown in Fig. 4, process 400 may include obtaining a multiclass classification model to be used for classification of the unknown sample into at least one class of a plurality of classes, wherein the multiclass classification model comprises a plurality of local auto-scaled OVO binary classifiers, each local auto-scaled OVO binary classifier of the plurality of local auto-scaled OVO binary classifiers being associated with a different pair of classes from the plurality of classes (block 420). For example, the classification device may obtain a multiclass classification model to be used for classification of the unknown sample into at least one class of a plurality of classes, wherein the multiclass classification model comprises a plurality of local auto-scaled OVO binary classifiers, each local auto-scaled OVO binary classifier of the plurality of local auto-scaled OVO binary classifiers being associated with a different pair of classes from the plurality of classes, as described above.

As further shown in Fig. 4, process 400 may include applying local auto-scaling to the spectroscopic dataset associated with the unknown sample to create a local auto-scaled spectroscopic dataset (block 430). For example, the classification device may apply local auto-scaling to the spectroscopic dataset associated with the unknown sample to create a local auto-scaled spectroscopic dataset, as described above.

As further shown in Fig. 4, process 400 may include performing a classification of the unknown sample based on the local auto-scaled spectroscopic dataset and using the multiclass classification model comprising the plurality of local auto-scaled OVO binary classifiers (block 440). For example, the classification device may perform a classification of the unknown sample based on the local auto-scaled spectroscopic dataset and using the multiclass classification model comprising the plurality of local auto-scaled OVO binary classifiers, as described above.

Process 400 may include additional implementations, such as any single implementation or any combination of implementations described below and/or in connection with one or more other processes described elsewhere herein.

In a first implementation, applying the local auto-scaling to the spectroscopic dataset comprises performing mean centering for each column of data in the spectroscopic dataset, and scaling each column of data of the spectroscopic dataset after performing the mean centering.

In a second implementation, alone or in combination with the first implementation, each column of data in the spectroscopic dataset corresponds to a different wavelength of light.

In a third implementation, alone or in combination with one or more of the first and second implementations, each row of data in the spectroscopic dataset corresponds to a spectroscopic sample across a range of wavelengths of light.

In a fourth implementation, alone or in combination with one or more of the first through third implementations, performing the classification of the unknown sample comprises determining a vote provided by each local auto-scaled OVO binary classifier of the plurality of local auto-scaled OVO binary classifiers based on the local auto-scaled spectroscopic dataset, identifying a class of the plurality of classes with a highest quantity of votes, and classifying the unknown sample as being included in the class of the plurality of classes with the highest quantity of votes.

In a fifth implementation, alone or in combination with one or more of the first through fourth implementations, process 400 includes obtaining a training dataset of spectroscopic data, generating, based on the training dataset, a plurality of OVO binary classifiers, wherein each OVO binary classifier of the plurality of OVO binary classifiers is associated with a different pair of classes from the plurality of classes, and applying local auto-scaling to each OVO binary classifier of the plurality of OVO binary classifiers to create the plurality of local auto-scaled OVO binary classifiers.

In a sixth implementation, alone or in combination with one or more of the first through fifth implementations, the multiclass classification model is an SVM-based model.

In a seventh implementation, alone or in combination with one or more of the first through sixth implementations, process 400 includes providing information associated with a result of the classification of the unknown sample.

Although Fig. 4 shows example blocks of process 400, in some implementations, process 400 includes additional blocks, fewer blocks, different blocks, or differently arranged blocks than those depicted in Fig. 4. Additionally, or alternatively, two or more of the blocks of process 400 may be performed in parallel.

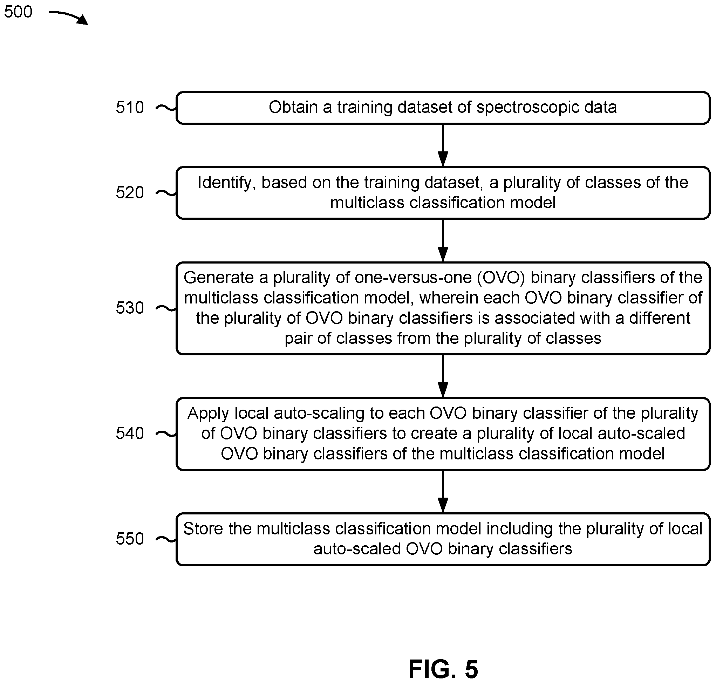

Fig. 5 is a flowchart of an example process 500 associated with generating a multiclass classification model including a plurality of local auto-scaled OVO binary classifiers. In some implementations, one or more process blocks of Fig. 5 are performed by a classification device (e.g., classification device 210). In some implementations, one or more process blocks of Fig. 5 are performed by another device or a group of devices separate from or including the classification device, such as a multispectral sensor device (e.g., multispectral sensor device 205), and/or a user device (e.g., user device 215). Additionally, or alternatively, one or more process blocks of Fig. 5 may be performed by one or more components of device 300, such as processor 320, memory 330, input component 340, output component 350, and/or communication component 360.

As shown in Fig. 5, process 500 may include obtaining a training dataset of spectroscopic data (block 510). For example, the classification device may obtain a training dataset of spectroscopic data, as described above.

As further shown in Fig. 5, process 500 may include identifying, based on the training dataset, a plurality of classes of the multiclass classification model (block 520). For example, the classification device may identify, based on the training dataset, a plurality of classes of the multiclass classification model, as described above.

As further shown in Fig. 5, process 500 may include generating a plurality of OVO binary classifiers of the multiclass classification model, wherein each OVO binary classifier of the plurality of OVO binary classifiers is associated with a different pair of classes from the plurality of classes (block 530). For example, the classification device may generate a plurality of OVO binary classifiers of the multiclass classification model, wherein each OVO binary classifier of the plurality of OVO binary classifiers is associated with a different pair of classes from the plurality of classes, as described above.

As further shown in Fig. 5, process 500 may include applying local auto-scaling to each OVO binary classifier of the plurality of OVO binary classifiers to create a plurality of local auto-scaled OVO binary classifiers of the multiclass classification model (block 540). For example, the classification device may apply local auto-scaling to each OVO binary classifier of the plurality of OVO binary classifiers to create a plurality of local auto-scaled OVO binary classifiers of the multiclass classification model, as described above.

As further shown in Fig. 5, process 500 may include storing the multiclass classification model including the plurality of local auto-scaled OVO binary classifiers (block 550). For example, the classification device may store the multiclass classification model including the plurality of local auto-scaled OVO binary classifiers, as described above.

Process 500 may include additional implementations, such as any single implementation or any combination of implementations described below and/or in connection with one or more other processes described elsewhere herein.

In a first implementation, process 500 includes receiving a spectroscopic dataset associated with an unknown sample, applying local auto-scaling to the spectroscopic dataset associated with the unknown sample to create a local auto-scaled spectroscopic dataset, and performing a classification of the unknown sample based on the local auto-scaled spectroscopic dataset and using the multiclass classification model comprising the plurality of local auto-scaled OVO binary classifiers.

In a second implementation, alone or in combination with the first implementation, applying the local auto-scaling to each OVO binary classifier comprises performing mean centering for each column of data associated with a given OVO binary classifier, and scaling each column of data associated with the given OVO binary classifier to unit variance after performing the mean centering.

In a third implementation, alone or in combination with one or more of the first and second implementations, each column of data associated with the given OVO binary classifier corresponds to a different wavelength of light.

In a fourth implementation, alone or in combination with one or more of the first through third implementations, each row of data with the given OVO binary classifier corresponds to a spectroscopic scan across a range of wavelengths of light.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A method, comprising:
receiving, by a device, a spectroscopic dataset associated with an unknown sample;
obtaining, by the device, a multiclass classification model to be used for classification of the unknown sample into at least one class of a plurality of classes;
wherein the multiclass classification model comprises a plurality of local auto-scaled one-versus-one (OVO) binary classifiers, each local auto-scaled OVO binary classifier of the plurality of local auto-scaled OVO binary classifiers being associated with a different pair of classes from the plurality of classes;
applying, by the device, local auto-scaling to the spectroscopic dataset associated with the unknown sample to create a local auto-scaled spectroscopic dataset; and
performing, by the device, a classification of the unknown sample based on the local auto-scaled spectroscopic dataset and using the multiclass classification model comprising the plurality of local auto-scaled OVO binary classifiers.

2. The method of claim 1, wherein applying the local auto-scaling to the spectroscopic dataset comprises:
performing mean centering for each column of data in the spectroscopic dataset; and
scaling each column of data of the spectroscopic dataset after performing the mean centering.

3. The method of claim 1 or claim 2, wherein each column of data in the spectroscopic dataset corresponds to a different wavelength of light; and/or
wherein each row of data in the spectroscopic dataset corresponds to a spectroscopic sample across a range of wavelengths of light.

4. The method of any preceding claim, wherein performing the classification of the unknown sample comprises:
determining a vote provided by each local auto-scaled OVO binary classifier of the plurality of local auto-scaled OVO binary classifiers based on the local auto-scaled spectroscopic dataset,
identifying a class of the plurality of classes with a highest quantity of votes, and
classifying the unknown sample as being included in the class of the plurality of classes with the highest quantity of votes.

5. The method of any preceding claim, further comprising:
obtaining a training dataset of spectroscopic data,
generating, based on the training dataset, a plurality of OVO binary classifiers,
wherein each OVO binary classifier of the plurality of OVO binary classifiers is associated with a different pair of classes from the plurality of classes, and
applying local auto-scaling to each OVO binary classifier of the plurality of OVO binary classifiers to create the plurality of local auto-scaled OVO binary classifiers.

6. The method of any preceding claim, wherein the multiclass classification model is a support vector machine (SVM)-based model.

7. The method of any preceding claim, further comprising providing information associated with a result of the classification of the unknown sample.

8. A device, comprising:
one or more memories; and
one or more processors, coupled to the one or more memories, configured to:
receive a spectroscopic dataset associated with an unknown sample;
obtain a multiclass classification model to be used for classification of the unknown sample into at least one class of a plurality of classes;
wherein the multiclass classification model comprises a plurality of local auto-scaled one-versus-one (OVO) binary classifiers, each local auto-scaled OVO binary classifier of the plurality of local auto-scaled OVO binary classifiers being associated with a different pair of classes from the plurality of classes;
apply local auto-scaling to the spectroscopic dataset associated with the unknown sample to create a local auto-scaled spectroscopic dataset; and
perform a classification of the unknown sample based on the local auto-scaled spectroscopic dataset and using the multiclass classification model comprising the plurality of local auto-scaled OVO binary classifiers.

9. The device of claim 8, wherein the one or more processors, to apply the local auto-scaling to the spectroscopic dataset, are configured to:
perform mean centering for each column of data in the spectroscopic dataset; and
scale each column of data of the spectroscopic dataset after performing the mean centering.

10. The device of claim 8 or claim 9, wherein the one or more processors, to perform the classification of the unknown sample, are configured to:
determine a vote provided by each local auto-scaled OVO binary classifier of the plurality of local auto-scaled OVO binary classifiers based on the local auto-scaled spectroscopic dataset,
identify a class of the plurality of classes with a highest quantity of votes, and
classify the unknown sample as being included in the class of the plurality of classes with the highest quantity of votes.

11. The device of claim 8, claim 9 or claim 10, wherein the one or more processors are further configured to:
obtain a training dataset of spectroscopic data,
generate, based on the training dataset, a plurality of one-versus-one (OVO) binary classifiers,
wherein each OVO binary classifier of the plurality of OVO binary classifiers is associated with a different pair of classes from the plurality of classes, and
apply local auto-scaling to each OVO binary classifier of the plurality of OVO binary classifiers to create the plurality of local auto-scaled OVO binary classifiers.

12. The device of any one of claims 8 to 11, wherein the one or more processors are further configured to provide information associated with a result of the classification of the unknown sample.

13. A method of generating a multiclass classification model, comprising:
obtaining, by a device, a training dataset of spectroscopic data;
identifying, by the device and based on the training dataset, a plurality of classes of the multiclass classification model;
generating, by the device, a plurality of one-versus-one (OVO) binary classifiers of the multiclass classification model,
wherein each OVO binary classifier of the plurality of OVO binary classifiers is associated with a different pair of classes from the plurality of classes;
applying, by the device, local auto-scaling to each OVO binary classifier of the plurality of OVO binary classifiers to create a plurality of local auto-scaled OVO binary classifiers of the multiclass classification model; and
storing, by the device, the multiclass classification model including the plurality of local auto-scaled OVO binary classifiers.

14. The method of claim 13, further comprising:
receiving a spectroscopic dataset associated with an unknown sample;
applying local auto-scaling to the spectroscopic dataset associated with the unknown sample to create a local auto-scaled spectroscopic dataset; and
performing a classification of the unknown sample based on the local auto-scaled spectroscopic dataset and using the multiclass classification model comprising the plurality of local auto-scaled OVO binary classifiers.

15. The method of claim 13 or claim 14, wherein applying the local auto-scaling to each OVO binary classifier comprises:
performing mean centering for each column of data associated with a given OVO binary classifier; and
scaling each column of data associated with the given OVO binary classifier to unit variance after performing the mean centering; and
optionally wherein each column of data associated with the given OVO binary classifier corresponds to a different wavelength of light.
